# EUROPÄISCHE PATENTSCHRIFT

(11) **EP 2 790 899 B1**
(45) Veröffentlichungstag und Bekanntmachung des Hinweises auf die Patenterteilung: **18.01.2017**
(21) Anmeldenummer: 12805588.6
(22) Anmeldetag: 07.12.2012
(51) Int. Cl.: B32B 5/02, B32B 5/08, B32B 5/12, B32B 5/26, B32B 5/28, B32B 5/32, F16L 9/12, F16L 9/133, B29C 70/86, B29C 70/42, B29C 70/44, B32B 1/08, B29C 70/46, B32B 7/12, B32B 7/02, B29C 70/08, B32B 27/32, B29D 23/00, B32B 27/12

(54) **VERFAHREN ZUR HERSTELLUNG EINES FASERVERSTÄRKTEN VERBUNDROHRES**
METHOD FOR PRODUCING A FIBRE-REINFORCED COMPOSITE TUBE
PROCÉDÉ DE FABRICATION D'UN TUBE COMPOSITE RENFORCÉ DE FIBRES

(30) Priorität: 14.12.2011 DE 102011056391
(43) Veröffentlichungstag der Anmeldung: 22.10.2014
(73) Patentinhaber: REHAU AG + Co, 95111 Rehau (DE)
(72) Erfinder: AL-SHEYYAB, Ahmad, 95111 Rehau (DE); OELSCHLEGEL, Alexander, 95176 Konradsreuth (DE)
(86) Internationale Anmeldenummer: PCT/EP2012/005056
(87) Internationale Veröffentlichungsnummer: WO 2013/087175

(56) Entgegenhaltungen:
- WO-A1-02/44067
- WO-A1-2009/128971
- WO-A1-2010/021255
- DE-A1- 4 215 756
- US-B1- 6 605 171

## Beschreibung

Die Erfindung betrifft ein Verfahren zur Herstellung eines faserverstärkten Verbundrohres,
- wobei, vorzugsweise mittels eines Extrusionsverfahrens, ein Kunststoffrohr hergestellt wird und
- wobei danach eine Verstärkungs-Filamente enthaltende Verstärkungsschicht auf das Kunststoffrohr aufgebracht wird.

In der Vergangenheit haben sich verschiedene Fertigungsverfahren zur Herstellung von Faserverbundwerkstoffen etabliert. Dies sind einerseits die Hochdruckverfahren, insbesondere das Spritzgießen, die Extrusion sowie das Fließpressen und andererseits die Niederdruckverfahren, wie z. B. RTM (Resin Transfer Molding) und Autoklav-Verfahren. Während sich die Hochdruckverfahren insbesondere durch die hiermit möglichen hohen Produktionsgeschwindigkeiten auszeichnen, können mit den Niederdruckverfahren Bauteile mit sehr hohen mechanischen Festigkeiten hergestellt werden. Die Bereitstellung solcher Bauteileigenschaften ist mit den Hochdruckverfahren allein nicht bzw. nur mit erheblichem Aufwand möglich. Nachteilig bei den Niederdruckverfahren hingegen sind die erforderlichen langen Aushärtezeiten der dabei eingesetzten Kunststoffe, welche die Ausstoßraten verringern und damit die Herstellkosten derartiger Bauteile erhöhen.

Beim Transport von flüssigen Medien, beispielsweise Wasser, unter hohem Druck von z. B. 10 bar Überdruck oder mehr, werden daher standardmäßig bislang Metallrohre oder dickwandige Kunststoffrohre eingesetzt, die beispielsweise als Wasser-Steigleitungen in mehrstöckigen Gebäuden verbaut werden. Aufgrund der in der Vergangenheit deutlich angestiegenen Metallpreise besteht hier ein zunehmender Bedarf an Alternativen. Ferner haben Metallrohre ein hohes Gewicht und sind sehr aufwändig im Transport zu und auch im Handling auf einer Baustelle. Darüber hinaus sind Metallrohre anfällig gegen Korrosion. Dickwandige Kunststoffrohre besitzen den Nachteil, dass sie bei vorgegebenem maximalen Außendurchmesser nur einen vergleichsweise kleinen freien Strömungsquerschnitt und ebenfalls ein hohes Gewicht bzw. Materialbedarf aufweisen.

Ein Verfahren mit den eingangs beschriebenen Merkmalen ist aus der DE 10 2009 016 596 A1 bekannt. Bei diesem Verfahren wird auf ein extrudiertes Kunststoffrohr ein hybrides Roving aufgewickelt, welches neben Verstärkungsfasern auch Kunststofffasern enthält. Zur Erhöhung der Steifigkeit des Rovings während des Wickelvorgangs werden die Kunststofffasern aufgeschmolzen. Setzt man ein derartig hergestelltes Verbundrohr jedoch beispielsweise zum Transport von Wasser unter hohem Druck in einer Gebäude-Steigleitung ein, so ist nach einer gewissen Zeit ein Austritt von Flüssigkeit durch die äußere Oberfläche des Verbundrohrs festzustellen. Aufgrund des hohen Innendrucks diffundiert Feuchtigkeit im Bereich der Verbindungselemente zwischen den einzelnen Verbundrohren durch die Stirnseiten des Verbundsrohres in die Verstärkungsschicht hinein. Diese weist nun wegen der eng nebeneinander liegenden Filamente viele Zwischenhohlräume mit sehr geringer Porenweite auf. Dies hat zur Folge, dass die Verstärkungsschicht hier eine ausgesprochene Kapillarwirkung besitzt und die in das Verbundrohr hineindiffundierende Flüssigkeit sehr leicht durch die Kapillaren der Verstärkungsschicht nach außen dringen kann. Als Ergebnis stellt sich bereits nach einer relativ kurzen Zeit eine feuchte äußere Oberfläche des Verbundrohres ein, welche insbesondere bei dessen Einsatz in Gebäuden nicht tolerierbar ist. Aufgrund der hier vorliegenden unvollständigen Konsolidierung lassen bei derartigen Verbundrohren ferner die mechanischen Eigenschaften mit der Zeit deutlich nach, da der beschriebene Effekt auch zu einer Schädigung der Verstärkungsschicht führt.

Aus der DE 42 15 756 A1 ist ein Verfahren zur Herstellung von Hohlkörpern bekannt, welche aus mehreren Schichten aufgebaut sind. Hierbei werden Hybridgarne aus Verstärkungsfasern und matrixbildende Thermoplastfasern auf einen Linerbehälter aus Kunststoff aufgewickelt. Der Wickelkörper wird durch eine Erwärmung auf Temperaturen oberhalb des Schmelzpunktes der Thermoplastfasern konsolidiert.

Die WO 2010/021255 A1 offenbart ein eine Innen- und eine Außenschicht aufweisendes, armiertes Kunststoffrohr, bei dem Armierungsfasern in eine zwischen Innen- und Außenschicht angeordnete Verbindungsschicht eingebettet sind. Die WO 2002/44067 A1 beschreibt die Kühlung eines Hohlkörpers mittels eines Fluides.

Der Erfindung liegt die Aufgabe zugrunde, ein Verfahren zur Herstellung eines faserverstärkten Verbundrohres anzugeben, welches auch beim Transport von unter hohem Druck stehenden Flüssigkeiten eine dauerhafte Dichtigkeit gewährleistet.

Erfindungsgemäß wird die Aufgabe durch die Merkmale des Patentanspruches 1 gelöst. Erfindungswesentlich ist, dass in der Verstärkungsschicht zumindest im Wesentlichen kein, vorzugsweise gar kein Kapillareffekt mehr entstehen kann. "Versiegeln" im Rahmen des Anspruches 1 meint hierbei insbesondere ein Ausfüllen und / oder Verschließen der Zwischenräume. Die Erfindung beruht auf der Erkenntnis, dass vergleichsweise günstige, ein geringes Gewicht aufweisende und hinsichtlich Korrosion unproblematische Faserverbundrohre auch für den Transport von Flüssigkeiten unter hohen Drücken, wie sie beispielsweise in Wassersteigleitungen von Gebäuden auftreten, eingesetzt werden können, sofern die in der Verstärkungsschicht enthaltenen Zwischenräume derart eliminiert werden, dass der beschriebene Kapillareffekt praktisch nicht, vorzugsweise überhaupt nicht mehr auftritt.

Der Kapillareffekt ist ganz allgemein das Verhalten von Flüssigkeiten, das sie bei Kontakt mit Kapillaren, z. B. engen Röhrchen, Spalten oder Hohlräumen, in Feststoffen zeigen. Taucht man beispielsweise ein Glasröhrchen senkrecht in Wasser, so steigt das Wasser in der engen Glasröhre ein Stück gegen die Gravitationskraft nach oben. Dieser Kapillareffekt wird durch die Oberflächenspannung von Flüssigkeiten selbst und der Grenzflächenspannung von Flüssigkeit mit der festen Oberfläche hervorgerufen. Je kleiner der Durchmesser der Kapillare, desto größer sind der Kapillardruck und die Steighöhe. Durch die erfindungsgemäße Lehre werden nun die in der Verstärkungsschicht durch die Filamente gebildeten, ungewünschten Kapillaren eliminiert und das Rohr kann für die genannten Einsatzzwecke genutzt werden.

Erfindungsgemäß enthält die Verstärkungsschicht neben den Verstärkungs-Filamenten auch Kunststoff-Filamente. Die Nachbehandlung stellt somit eine Nachkonsolidierung dar, bei der die Kunststoff-Filamente auf eine Temperatur gebracht werden, die zu einer zumindest teilweisen Aufschmelzung dieser Kunststoff-Filamente führt, so dass die Zwischenräume in der Verstärkungsschicht durch die entstehende Schmelze versiegelt werden. Wesentlich ist hierbei, dass die Nachkonsolidierung nach der Aufbringung der Verstärkungsschicht auf das Kunststoffrohr erfolgt, da erst nach dieser Aufbringung die Kapillarstruktur der Verstärkungsschicht festliegt. Erfindungsgemäß wird das Kunststoffrohr während der Nachkonsolidierung von innen gekühlt, so dass dieses zumindest weitgehend im festphasigen Zustand verbleibt. Somit ist gewährleistet, dass das Kunststoffrohr durch die für den Aufschmelzungsprozess der in der Verstärkungsschicht enthaltenen Kunststoff-Filamente erforderliche Wärmeeinbringung nicht geschädigt wird.

Vorzugsweise bestehen die Kunststoff-Filamente und das Kunststoffrohr aus demselben Kunststoffmaterial. Besteht beispielsweise das Kunststoffrohr aus einem Polypropylen, so werden vorzugsweise auch Polypropylen-Filamente in die Verstärkungsschicht integriert, welche beim Aufschmelzen sich entsprechend gut mit der äußeren Oberfläche des Kunststoffrohres verbinden. Im Rahmen der Erfindung liegt es hierbei auch, dass beim Kunststoffrohr einerseits und den Kunststoff-Filamenten andererseits Polypropylen-Materialien unterschiedlicher Dichte eingesetzt werden. Auch können beispielsweise im PolypropylenMaterial des Kunststoffrohres Zuschlagstoffe enthalten sein. Im Rahmen der Erfindung liegt es auch, dass das Kunststoffrohr und die Kunststoff-Materialien aus miteinander reagierenden Kunststoffen bestehen, z.B. ein PVC-Rohr mit PET-

Erfindungsgemäß erfolgt die Kühlung des Kunststoffrohres mittels eines Fluides, welches das Rohr durchströmt. Dabei kann es sich um ein Gas, beispielsweise Luft, oder aber auch um eine Flüssigkeit, z.B. Wasser, handeln. Aufgrund der Durchströmung ist ein kontinuierlicher Abtransport von Wärme von der inneren Oberfläche des Rohres gewährleistet. Hierbei ist in das Kunststoffrohr ein flexibler Schlauch eingebracht, der mit dem Fluid beaufschlagt wird. So kann beispielsweise bei einer Luftkühlung dieser Schlauch an eine Druckluftpumpe angeschlossen werden, welche eine gleichmäßige Durchströmung und damit einen kontinuierlichen Wärmeabtransport von der inneren Rohroberfläche sicherstellt. Alternativ hierzu ist es natürlich auch möglich, den Schlauch an eine Wasserleitung anzuschließen und entsprechend mit Kühlwasser zu beaufschlagen. Durch den flexiblen Schlauch wird die Bereitstellung der inneren Kühlung des Kunststoffrohres erleichtert.

Zweckmäßigerweise erfolgt die Nachkonsolidierung derart, dass die Temperatur der äußeren Oberfläche des Kunststoffrohres im Bereich der Schmelztemperatur T_{M} dieses Kunststoffs gehalten wird. Die Temperatur der inneren Oberfläche des Kunststoffrohres wird hingegen vorzugsweise unterhalb der Kristallisationstemperatur T_{C} dieses Kunststoffs gehalten. Hierbei ist zu beachten, dass bei Kunststoffen sich die Kristallisationstemperatur T_{C} in der Regel deutlich von der Schmelztemperatur T_{M} unterscheidet. Die Schmelztemperatur T_{M} ist jene Temperatur, bei der es bei einer Erwärmung eines Kunststoffes aus dem festphasigen Zustand heraus zur Bildung einer ersten Schmelze kommt. Die Kristallisationstemperatur T_{C} hingegen ist die Temperatur, ab der es bei der Abkühlung einer Kunststoffschmelze zur Bildung erster Feststoffpartikel kommt. Durch die Einstellung des vorstehend beschriebenen Temperaturprofils ist einerseits gewährleistet, dass die Kunststoff-Filamente in der Verstärkungsschicht aufgeschmolzen werden und andererseits hierbei gleichzeitig das Kunststoffrohr nicht geschädigt wird.

Der Gewichtsanteil der Kunststoff-Filamente in der Verstärkungsschicht beträgt zweckmäßigerweise 40 bis 80 %, z.B. 40 bis 60 %. Je nach Anwendungsfall kann der Gewichtsanteil der Kunststoff-Filamente in der Verstärkungsschicht auch 20 bis 40 % oder auch 60 bis 80 % betragen.

Insgesamt erfolgt die erfindungsgemäße Versiegelung der Zwischenräume beispielsweise derart, dass bei einer Beaufschlagung der Stirnseiten der Verstärkungsschicht des Verbundrohres mit Wasser mit einem Betriebsdruck von 10 bar Überdruck (Ü), vorzugsweise 15 bar Ü, insbesondere 20 bar Ü, dauerhaft keine Penetration der äußeren Oberfläche der Verstärkungsschicht mit Wasser stattfindet. Hierbei wird zweckmäßigerweise von einer maximalen Wandstärke der Verstärkungsschicht von 50 mm, vorzugsweise 10 mm, insbesondere 5 mm ausgegangen.

Vorzugsweise ist die Verstärkungsschicht aus Tapes und / oder Rovings aufgebaut; z.B. besteht die Verstärkungsschicht aus Tapes und / oder Rovings. Bei den Filamenten der Verstärkungsschicht kann es sich um, vorzugsweise endlose, Fasern oder auch aus jeweils einer Vielzahl von, vorzugsweise endlosen, Fasern bestehenden Fäden handeln. Rovings können z.B. Bündel von endlosen, unverdrehten, gestreckten Filamenten sein. Entsprechend sind die Filamente hier unidirektional ausgerichtet. Die Rovings können jedoch auch derart ausgebildet sein, dass sich die Filamente überkreuzen, z.B. in Form eines geflochtenen Rovings. Die Filamente des Rovings können derart zueinander ausgerichtet sein, dass sie gemeinsam eine rautenförmige Struktur bilden. Hierdurch weist das Roving einen flächigen Verbund auf, der in Flächenebene in beliebige Richtungen hoch belastbar ist, wodurch es auch auf sehr einfache Art und Weise verarbeitet werden kann. Die Rovings können auch als Gewebe ausgebildet sein. Bei den Tapes sind die Filamente wiederum unidirektional ausgerichtet und in geeigneter Weise nebeneinander fixiert (z.B. durch Schussfäden, die beispielsweise aus Kunststoff oder demselben Material wie die entsprechenden Verstärkungs-Filamente bestehen), so dass sie gemeinsam eine bandförmige Gestalt annehmen. Die Tapes bzw. Rovings können nun selbst bereits einen hybriden Aufbau besitzen, indem sie aus Verstärkungs-Filamenten einerseits und Kunststoff-Filamenten andererseits bestehen. Es ist jedoch aber auch möglich, aus Verstärkungs-Filamenten bestehende Tapes/Rovings mit aus Kunststoff-Filamenten bestehenden Tapes/Rovings zu kombinieren.

Zweckmäßigerweise werden zur Bildung der Verstärkungsschicht die Filamente, vorzugsweise mehrfach, um das Kunststoffrohr gewickelt und / oder geflochten. Die Verstärkungs-Filamente bestehen vorzugsweise aus einem Mineral, insbesondere Glas, und / oder Kohlenstoff und / oder Kunststoff, insbesondere Aramid, und / oder Basalt und / oder Keramik und / oder Metall. Der Schmelzpunkt eines geeigneten Werkstoffes für die Verstärkungs-Filamente liegt vorteilhafterweise oberhalb der Schmelztemperatur T_{M} der Kunststoff-Filamente. Der Innendurchmesser des Kunststoffrohres beträgt vorzugsweise 10 mm bis 1000 mm, insbesondere 50 mm bis 300 mm, während die Wandstärke des Kunststoffrohres zweckmäßigerweise im Bereich von 2 mm bis 50 mm, insbesondere 2 mm bis 10 mm, und die Wandstärke der Verstärkungsschicht zweckmäßigerweise im Bereich von 0,5 mm bis 50 mm, insbesondere 0,5 mm bis 10 mm, z.B. 0,5 mm bis 3 mm, liegt. Im Rahmen der Erfindung liegt es ferner, dass auf die Verstärkungsschicht eine Schutzschicht aufgebracht wird, welche aufextrudiert sein kann und z. B. aus Kunststoff besteht. Die erfindungsgemäße Lehre bezieht sich vorzugsweise auf mittels eines Extrusionsverfahrens hergestellte Kunststoffrohre, welche mit der Verstärkungsschicht armiert werden. Im Rahmen der Erfindung liegt es aber auch, das Kunststoffrohr auf eine andere Art, z.B. mittels eines Pultrusionsverfahrens, herzustellen.

Das erfindungsgemäß hergestellte Verbundrohr kann insbesondere Anwendung finden beim Transport von Wasser oder auch anderen Flüssigkeiten (z.B. Rohöl/Raffineriezwischenprodukten bzw. Chemikalien) unter hohem Druck, z.B. bei 10 bar Ü und mehr, und zwar beispielsweise als Steigleitung zur Wasserversorgung in mehrstöckigen Gebäuden (z.B. Hochhäusern) oder aber auch in der Öl- bzw. Chemischen Industrie.

Im Folgenden wird die Erfindung anhand einer lediglich ein Ausführungsbeispiel darstellenden Zeichnung ausführlich erläutert. Es zeigen schematisch:
- Fig. 1a: eine erfindungsgemäße Herstellung eines Verbundrohrs mit Kunststoffrohr und Verstärkungsschicht in Querschnittsdarstellung,
- Fig. 1b: die vergrößerte ausschnittsweise Ansicht X in Fig. 1 a
- Fig. 2: eine weitere Ausführungsform der Erfindung in einer Darstellung gemäß Fig. 1a und
- Fig. 3: das in Fig. 2 dargestellte Verbundrohr in Längsansicht während einer erfindungsgemäßen Nachkonsolidierung.

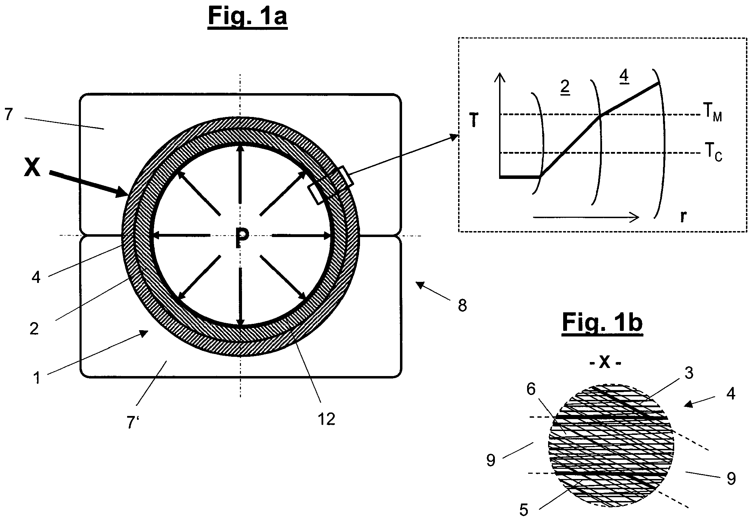

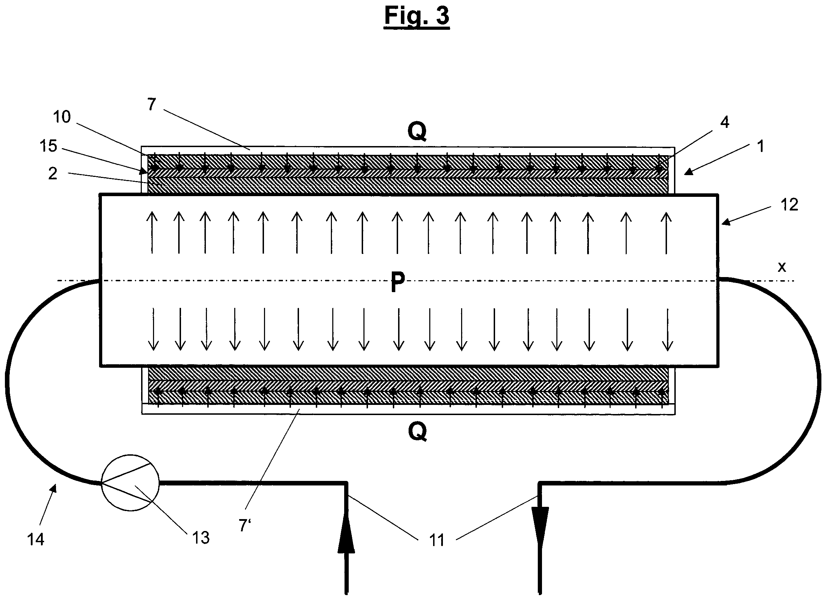

Die Fig. 1 zeigt ein Verfahren zur Herstellung eines faserverstärkten Verbundrohres 1, welches über nicht dargstellte Verbindunselemente, z.B. Pressfittinge, mit weiteren Verbundrohren zu einer längeren Rohrleitung verbunden ist. Hierbei wird zunächst mittels eines (nicht dargestellten) Extrusionsverfahrens ein Kunststoffrohr 2 hergestellt. Dieses weist einen kreisförmigen Querschnitt auf, wodurch jedoch andere Querschnittsformen nicht ausgeschlossen sind. Nach der Extrusion des Kunststoffrohres 2 wird auf dieses eine Verstärkungs-Filamente 3 enthaltende Verstärkungsschicht 4 aufgebracht (vgl. Fig. 1a). Der so hergestellte Verbund wird anschließend einer Nachbehandlung unterzogen, bei der zwischen den Filamenten 3, 5 vorhandene Zwischenräume 6 in der Verstärkungsschicht 4 derart versiegelt werden, dass bei einer Beaufschlagung der Stirnseiten 15 (vergl. Fig. 3) der Verstärkungsschicht 4 mit unter 10 bar Überdruck stehendem Wasser in der Verstärkungsschicht 4 dauerhaft kein Kapillareffekt entsteht und entsprechend dauerhaft keine Penetration der äußeren Oberfläche der Verstärkungssschicht mit Wasser stattfindet. Bei der Versiegelung werden die Zwischenräume 6 ausgefüllt und / oder verschlossen. Im Ausführungsbeispiel erfolgt die erfindungsgemäße Versiegelung folgendermaßen: Die Verstärkungsschicht 4 enthält neben den Verstärkungs-Filamenten 3 auch Kunststoff-Filamente 5.

Die Nachbehandlung stellt eine Nachkonsolidierung dar, bei der die Kunststoff-Filamente 5 auf eine Temperatur gebracht werden, die zu einer Aufschmelzung dieser KunststoffFilamente 5 führt, so dass die Zwischenräume 6 in der Verstärkungsschicht 4 durch die entstehende Schmelze versiegelt werden. Während der Nachkonsolidierung wird das Kunststoffrohr 2 von innen gekühlt (vgl. Fig. 3), so dass dieses zumindest weitgehend im festphasigen Zustand verbleibt. Wie dem in Fig. 1 a rechts dargestellten radialen Temperaturverlauf im Verbundrohr 1 zu entnehmen ist, wird während der Nachkonsolidierung die Temperatur der äußeren Oberfläche des Kunststoffrohrs 2 im Bereich der Schmelztemperatur T_{M} dieses Kunststoffs gehalten. Die Temperatur der inneren Oberfläche des Kunststoffrohres 2 wird hingegen unterhalb der Kristallisationstemperatur T_{C} dieses Kunststoffs gehalten. Die Temperatur an der äußeren Oberfläche der Verstärkungsschicht 4 liegt oberhalb der genannten Schmelztemperatur T_{M}. Die Kunststoff-Filamente 5 und das Kunststoffrohr 2 bestehen aus demselben Kunststoffmaterial, im Ausführungsbeispiel Polypropylen.

Zur Nachkonsolidierung des Verbundrohres 1 wurde dieses in ein zwei Hälften 7, 7' aufweisendes Konsolidierungs-Werkzeug 8 eingelegt, welches entsprechend beheizt wird und hierdurch einen Wärmestrom Q (vergl. Fig. 3) auf das Verbundrohr 1 überträgt. Die Verstärkungsschicht 4 besteht im Ausführungsbeispiel aus unidirektionalen Tapes 9 (in Fig. 1 b durch gestrichelte Linien angedeutet), welche mittels einer Flechttechnik mehrschichtig auf das Kunststoffrohr 2 aufgebracht wurden. Die Verstärkungs-Filamente 3 der Tapes 9 sind als Kohlenstoff-, Glas- oder Aramidfasern ausgebildet. Der Gewichtsanteil der KunststoffFilamente 5 in den Tapes 9 beträgt ca. 50 %.

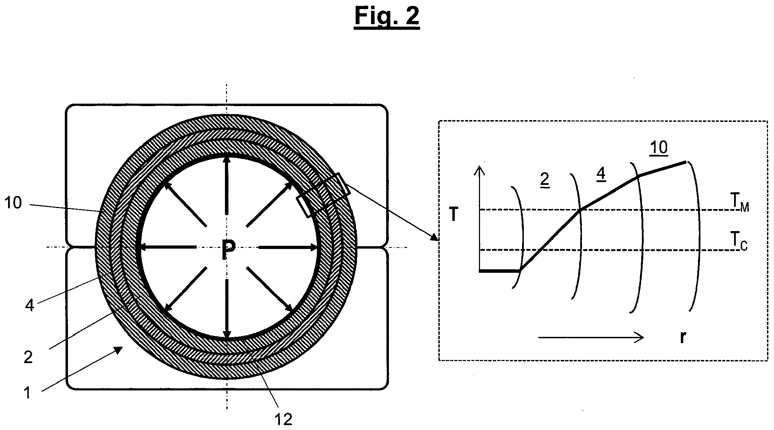

Im Ausführungsbeispiel gemäß Fig. 2 wurde auf die Verstärkungsschicht 4 zusätzlich eine Schutzschicht 10 aufextrudiert. Hierfür wurde ein Kunststoff gewählt, dessen Schmelztemperatur oberhalb der Schmelztemperatur T_{M} des Kunststoffrohres 2 bzw. der KunststoffFilamente 5 liegt. Hierdurch ist sichergestellt, dass während der Nachkonsolidierung die Schutzschicht 10 in einem festphasigen Zustand verbleibt, obwohl deren Temperatur zur Wärmeübertragung auf einen Wert oberhalb der Schmelztemperatur T_{M} des Kunststoffrohres 2 bzw. der Kunststoff-Filamente 5 gebracht werden muss.

Fig. 3 stellt den Nachkonsolidierungs-Prozess in Längsrichtung x des Verbundrohrs 1 gesehen dar. Wie bereits erläutert, wird das Kunststoffrohr 2 während der Nachkonsolidierung von innen gekühlt. Die Kühlung des Kunststoffrohres 2 erfolgt im Ausführungsbeispiel mittels Luft 11, welche mit einem Druck P das Rohr durchströmt. Hierzu ist in das Kunststoffrohr 2 ein flexibler Schlauch 12 eingebracht, der mit der Luft 11 beaufschlagt wird. Aufgrund des Innendrucks P legt sich dieser Schlauch 12 flächig an die innere Oberfläche des Kunststoffrohres 2 an. Mittels einer Druckluftpumpe 13 wird über eine Leitung 14 die entsprechende Zwangsdurchströmung des Schlauches 12 und damit des Kunststoffrohres 2 sichergestellt, so dass kontinuierlich Wärme abtransportiert wird.

## Patentansprüche

1. Verfahren zur Herstellung eines faserverstärkten Verbundrohres (1),
- wobei, vorzugsweise mittels eines Extrusionsverfahrens, ein Kunststoffrohr (2) hergestellt wird,
- wobei danach eine Verstärkungs-Filamente (3) enthaltende Verstärkungsschicht (4) auf das Kunststoffrohr (2) aufgebracht wird,
- wobei der so hergestellte Verbund anschließend einer Nachbehandlung unterzogen wird, bei der zwischen den Filamenten (3, 5) vorhandene Zwischenräume (6) in der Verstärkungsschicht (4) derart versiegelt werden, dass in der Verstärkungsschicht (4) zumindest im Wesentlichen kein Kapillareffekt in Bezug auf Wasser mehr entstehen kann,
- wobei die Verstärkungsschicht (4) neben den Verstärkungs-Filamenten (3) auch Kunststoff-Filamente (5) enthält,
- wobei die Nachbehandlung eine Nachkonsolidierung darstellt, bei der die KunststoffFilamente (5) auf eine Temperatur gebracht werden, die zu einer zumindest teilweisen Aufschmelzung dieser Kunststoff-Filamente (5) führt, so dass die Zwischenräume (6) in der Verstärkungsschicht (4) durch die entstehende Schmelze versiegelt werden,
**dadurch gekennzeichnet, dass**
das Kunststoffrohr (2) während der Nachkonsolidierung von innen gekühlt wird, so dass dieses zumindest weitgehend im festphasigen Zustand verbleibt,
- dass die Kühlung des Kunststoffrohres (2) mittels eines Fluides (11) erfolgt, welches das Rohr durchströmt und
- dass zur Nachkonsolidierung in das Kunststoffrohr (2) ein flexibler Schlauch (12) eingebracht wird, der mit dem Fluid (11) beaufschlagt wird.

2. Verfahren nach Anspruch 1, **dadurch gekennzeichnet, dass** die Kunststoff-Filamente (5) und das Kunststoffrohr (2) aus demselben Kunststoffmaterial bestehen.

3. Verfahren nach Anspruch 1 oder 2, **dadurch gekennzeichnet, dass** die Nachkonsolidierung derart erfolgt, dass die Temperatur der inneren Oberfläche des Kunststoffrohres (2) unterhalb der Kristallisationstemperatur (T_{C}) dieses Kunststoffs gehalten wird.

4. Verfahren nach einem der Ansprüche 1 bis 3, **dadurch gekennzeichnet, dass** der Gewichtsanteil der Kunststoff-Filamente (5) in der Verstärkungsschicht (4) 40 bis 80 % beträgt.

5. Verfahren nach einem der Ansprüche 1 bis 4, **dadurch gekennzeichnet, dass** die Verstärkungsschicht (4) aus Tapes (9) und / oder Rovings aufgebaut ist.

6. Verfahren nach einem der Ansprüche 1 bis 5, **dadurch gekennzeichnet, dass** zur Bildung der Verstärkungsschicht (4) die Filamente (3, 5) um das Kunststoffrohr (2) gewickelt und / oder geflochten werden.

7. Verfahren nach einem der Ansprüche 1 bis 6, **dadurch gekennzeichnet, dass** die Verstärkungs-Filamente (3) aus Mineral, insbesondere Glas, und / oder Kohlenstoff und / oder Kunststoff, insbesondere Aramid, und / oder Basalt und / oder Keramik und / oder Metall bestehen.

8. Verfahren nach einem der Ansprüche 1 bis 7, **dadurch gekennzeichnet, dass** auf die Verstärkungsschicht (4) eine Schutzschicht (10) aufgebracht wird.

## Claims

1. Method for producing a fibre-reinforced composite tube (1),
- wherein a tube of plastic (2) is produced, preferably by means of an extrusion process,
- wherein, after that, a reinforcing layer (4) containing reinforcing filaments (3) is applied to the tube of plastic (2),
- wherein the composite produced in this way is subsequently subjected to a post-treatment, in which interspaces (6) between the filaments (3, 5) in the reinforcing layer (4) are sealed in such a way that at least substantially no capillary effect with respect to water can occur any longer in the reinforcing layer (4),
- wherein, apart from the reinforcing filaments (3), the reinforcing layer (4) also contains filaments of plastic (5),
- wherein the post-treatment takes the form of a post-consolidation, in which the filaments of plastic (5) are brought to a temperature that leads to at least partial melting of these filaments of plastic (5), so that the interspaces (6) in the reinforcing layer (4) are sealed by the melt produced,
**characterized**
- **in that**, during the post-consolidation, the tube of plastic (2) is cooled from the inside, so that it remains at least largely in the solid-phase state,
- **in that** the cooling of the tube of plastic (2) is performed by means of a fluid (11), which flows through the tube, and
- **in that**, for the post-consolidation, a flexible hose (12), to which the fluid (11) is admitted, is introduced into the tube of plastic (2).

2. Method according to Claim 1, **characterized in that** the filaments of plastic (5) and the tube of plastic (2) consist of the same plastics material.

3. Method according to Claim 1 or 2, **characterized in that** the post-consolidation is performed in such a way that the temperature of the inner surface of the tube of plastic (2) is kept below the crystallization temperature (TC) of this plastic.

4. Method according to one of Claims 1 to 3, **characterized in that** the proportion by weight of the filaments of plastic (5) in the reinforcing layer (4) is 40 to 80%.

5. Method according to one of Claims 1 to 4, **characterized in that** the reinforcing layer (4) is made up of tapes (9) and/or rovings.

6. Method according to one of Claims 1 to 5, **characterized in that**, to form the reinforcing layer (4), the filaments (3, 5) are wound and/or braided around the tube of plastic (2).

7. Method according to one of Claims 1 to 6, **characterized in that** the reinforcing filaments (3) consist of mineral, in particular glass, and/or carbon and/or plastic, in particular aramid, and/or basalt and/or ceramic and/or metal.

8. Method according to one of Claims 1 to 7, **characterized in that** a protective layer (10) is applied to the reinforcing layer (4).

## Revendications

1. Procédé de fabrication d'un tube composite renforcé de fibres (1),
- dans lequel on fabrique un tube en matière plastique (2), de préférence par un procédé d'extrusion,
- dans lequel on applique ensuite sur le tube en matière plastique (2) une couche de renforcement (4) contenant des filaments de renforcement (3),
- dans lequel on soumet ensuite le composite ainsi fabriqué à un post-traitement, dans lequel on obture des interstices (6) présents entre les filaments (3, 5) dans la couche de renforcement (4), de telle manière qu'il ne puisse plus se produire essentiellement aucun effet de capillarité par rapport à l'eau dans la couche de renforcement (4),
- dans lequel la couche de renforcement (4) contient aussi des filaments en matière plastique (5) en plus des filaments de renforcement (3),
- dans lequel le post-traitement représente une reconsolidation, dans laquelle on porte les filaments en matière plastique (5) à une température qui conduit à une fusion au moins partielle de ces filaments en matière plastique (5), de telle manière que les interstices (6) dans la couche de renforcement (4) soient obturés par la masse fondue produite,
**caractérisé en ce que**
- on refroidit le tube en matière plastique (2) par l'intérieur pendant la reconsolidation, de telle manière que celui-ci reste au moins largement à l'état de phase solide,
- on effectue le refroidissement du tube en matière plastique (2) au moyen d'un fluide (11), qui parcourt le tube, et
- on introduit dans le tube en matière plastique (2), pour la reconsolidation, un tuyau flexible (12) qui est alimenté avec le fluide (11).

2. Procédé selon la revendication 1, **caractérisé en ce que** les filaments en matière plastique (5) et le tube en matière plastique (2) se composent du même matériau de matière plastique.

3. Procédé selon la revendication 1 ou 2, **caractérisé en ce que** l'on effectue la reconsolidation de telle manière que la température de la surface intérieure du tube en matière plastique (2) soit maintenue en dessous de la température de cristallisation (Tc) de cette matière plastique.

4. Procédé selon l'une quelconque des revendications 1 à 3, **caractérisé en ce que** la part pondérale des filaments en matière plastique (5) dans la couche de renforcement (4) vaut 40 à 80 %.

5. Procédé selon l'une quelconque des revendications 1 à 4, **caractérisé en ce que** la couche de renforcement (4) est construite à partir de bandes (9) et/ou de tissu stratifil.

6. Procédé selon l'une quelconque des revendications 1 à 5, **caractérisé en ce que** l'on enroule et/ou on tisse les filaments (3, 5) autour du tube en matière plastique (2) pour la formation de la couche de renforcement (4).

7. Procédé selon l'une quelconque des revendications 1 à 6, **caractérisé en ce que** les filaments de renforcement (3) se composent d'une matière minérale, en particulier de verre, et/ou de carbone et/ou de matière synthétique, en particulier d'aramide, et/ou de basalte et/ou de céramique et/ou de métal.

8. Procédé selon l'une quelconque des revendications 1 à 7, **caractérisé en ce que** l'on dépose une couche de protection (10) sur la couche de renforcement (4).
